(19) Europäisches Patentamt

European Patent Office

Office européen des brevets

(11) Veröffentlichungsnummer: **0 292 723 B1**

(12) **EUROPÄISCHE PATENTSCHRIFT**

(45) Veröffentlichungstag der Patentschrift: **30.09.92**

(21) Anmeldenummer: **88106811.8**

(22) Anmeldetag: **28.04.88**

(51) Int. Cl.5: **B65G 65/48**, G01G 11/00, G01G 9/00

(54) Vorrichtung zur kontinuierlichen Ermittlung der Förderstärke eines Schüttgutstromes und/oder zum kontinuierlichen Dosieren von Schüttgut.

(30) Priorität: **25.05.87 DE 3717615**

(43) Veröffentlichungstag der Anmeldung:
**30.11.88 Patentblatt 88/48**

(45) Bekanntmachung des Hinweises auf die
Patenterteilung:
**30.09.92 Patentblatt 92/40**

(84) Benannte Vertragsstaaten:
**AT CH DE LI**

(56) Entgegenhaltungen:
**CH-A- 449 993**
**DE-A- 3 511 843**
**US-A- 1 758 750**
**US-A- 2 652 141**
**US-A- 3 805 904**

(73) Patentinhaber: **CARL SCHENCK AG**
**Landwehrstrasse 55 Postfach 40 18**
**W-6100 Darmstadt(DE)**

(72) Erfinder: **Labschies, Hartmut**
**Maystrasse 2**
**W-6146 Alsbach/Hähnlein 2(DE)**

(74) Vertreter: **Brandt, Ernst-Ulrich**
**Fa. Carl Schenck AG Patentabteilung Land-**
**wehrstrasse 55 Postfach 40 18**
**W-6100 Darmstadt 1(DE)**

## Beschreibung

Die Erfindung betrifft eine Vorrichtung zur Ermittlung eines kontinuierlichen Schüttgutstromes gemäß dem Oberbegriff des Patentanspruchs 1.

Bei einer bekannten Vorrichtung zum Abmessen von Schüttgut (CH-PS 362 542) wird das Schüttgut von einem Zulauftrichter auf einen mit senkrechter Achse rotierenden Drehteller gegeben und auf diesem von der Zuführstelle zu einer Abführstelle geführt, wo es durch einen Abstreifer vom Drehteller abgestreift wird. Der Drehteller ist auf einer Wiegevorrichtung angeordnet, mit der das Gewicht des auf dem Drehteller befindlichen Schüttgutes ermittelt werden kann. Eine solche Vorrichtung hat nur eine begrenzte Meßgenauigkeit.

Aus der US 3,805,904 ist eine Wägevorrichtung für Stückguter bekannt, die nach dem Fliehkraftprinzip arbeitet. Eine derartige Einrichtung ist jedoch für Schüttgüter kaum verwendbar.

Der Erfindung liegt deshalb die Aufgabe zugrunde, eine Wägevorrichtung für Schüttgüter zu schaffen, die sowohl zur kontinuierlichen Ermittlung der Förderstärke als auch zum kontinuierlichen Dosieren der Schüttgüter unter Einhaltung einer hinreichenden Meßgenauikeit geeignet ist.

Diese Aufgabe wird durch die im Patentanspruch 1 angegebene Erfindung gelöst. Weiterbildungen und vorteilhafte Ausführungsbeispiele der Erfindung sind in den Unteransprüchen angegeben. Dabei geht die vorliegende Erfindung von dem Gedanken aus, die Fliehkraft eines auf einer Kreisbahn bewegten Schüttgutstromes zur Ermittlung der Förderstärke des Schüttgutstromes und/oder zum Dosieren des Schüttgutes auszunutzen, wobei das Schüttgut eine etwa halbkreisförmige Bahn durchläuft.

Die Fliehkraft des auf dieser Bahn bewegten Schüttgutes ist bei einer gegebenen Umfangsgeschwindigkeit und gegebenem Radius proportional zur Masse bzw. dem Gewicht des bewegten Schüttgutes. Die Fliehkraft kann also zusammen mit weiteren, im allgemeinen konstanten Faktoren (Drehzahl, Radius) zur Bestimmung der Förderstärke oder zum Dosieren von Schüttgut herangezogen werden.

Die erfindungsgemäße Vorrichtung kann insbesondere bei leicht fließenden Materialien in geschlossenen Systemen angewendet werden ohne daß sich Entlüftungs- oder Druckkompensationsprobleme ergeben. Sie ist unempfindlich gegen äußere Einflüsse sowie taraunempfindlich. Die Vorrichtung ermöglicht einen gleichförmigen Materialaustrag ohne Pulsationen. Die Vorrichtung weist eine geringe Bauhöhe auf. Sie sind geeignet zum direkten Anflanschen an bauseitige Silos, kann staubdicht ausgeführt werden und benötigt keine flexiblen Verbindungen.

Die Erfindung wird in der Zeichnung dargestellt und in der folgenden Beschreibung näher erläutert. Es zeigen:

Fig. 1    schematische Darstellung des Erfindungsprinzip bzw. des erfindungsgemäßen Verfahrens

Fig. 2    Vertikalschnitt durch eine Ausführungsform der Erfindung mit Schüttgutzuführung über Schaufelrad

Fig. 3    Axialschnitt der Ausführungsform nach Fig. 2.

Fig. 4    Ausführungsform mit Schüttgutzuführung über Zellrad

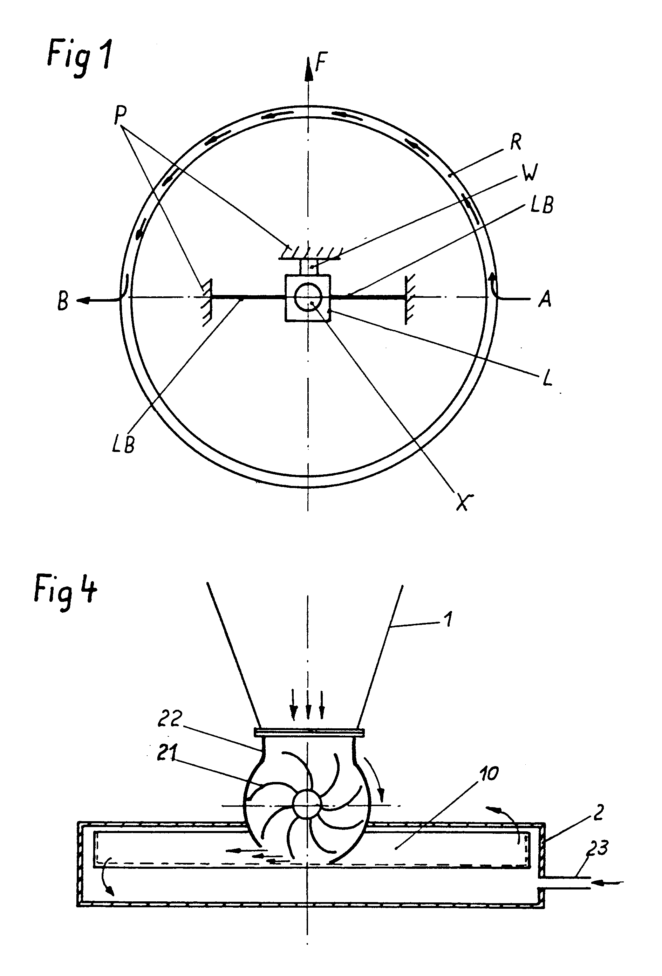

Wie aus Fig. 1 in einer Schemadarstellung erkennbar ist, wird das Schüttgut bei A auf eine in einer horizontalen Ebene verlaufende Kreisbahn aufgebracht, wobei sich ein Schüttgutring R ausbildet. Das Schüttgut durchläuft die Kreisbahn in Pfeilrichtung in einem Halbkreis und wird bei B aus der Kreisbahn ausgetragen. Auf seinem Weg wird das Schüttgut am Umfang der Kreisbahn z.B. durch einen vertikalen Rand oder Bund geführt bzw. am Verlassen der Kreisbahn gehindert.

Der Massenschwerpunkt des Schüttgutringes R bzw. des aufgegebenen Materials sollte, auch bei unterschiedlichem Schüttgutdurchsatz, möglichst konstant sein. Der Schüttgutring sollte daher möglichst schmal sein.

Die Fliehkraft F des auf der Kreisbahn befindlichen Schüttgutes ist proportional der Masse m des Schüttgutes sowie weiteren Faktoren (Radius des Massenschwerpunktes r des Schüttgutes, Quadrat der Winkelschwindigkeit w):

$$F = m \cdot r \cdot w^2.$$

Die Kreisbahn kann z. B. durch ein rotierendes Meßrad mit vertikaler Achse gebildet werden. Die Achse X des Meßrades ist in einem Lager L aufgenommen und über Lenkeranordnungen LB, z. B. Blattfederlenker, sowie eine Kraftmeßeinrichtung, z. B. eine Kraftmeßdose, eine Wägezelle W oder dgl. an Festpunkten P abgestützt. Die Lenkeranordnung läßt Bewegungen des Lagers senkrecht zu den Lenkern zu, während Bewegungen in Lenkerrichtung verhindert werden. Die Kraftmeßeinrichtung ist daher um 90o versetzt zu den Lenkern angeordnet. Die Lenkeranordnung und die Anordnung der Kraftmeßeinrichtung ist hierbei so getroffen, daß die Fliehkraft F und gleichgerichtete Fliehkraftkomponenten auf die Kraftmeßeinrichtung W übertragen bzw. durch diese aufgenommen werden, während Kräfte und Kraftkomponenten senkrecht dazu von der Lenkeranordnung auf Festpunkte P übertragen werden. Das von der Kraftmeßeinrichtung gelieferte Meßsignal ist daher bei gegebener Drehzahl und gegebenem Radius ein Maß für die Förderstärke, d.h. für die Masse oder das Gewicht des in der Zeiteinheit geförderten bzw. durchgesetzten Schüttgutes, z. B. in kg/Sekunde. Es kann zum Dosieren oder zur Regelung des Schüttgutstromes verwendet werden.

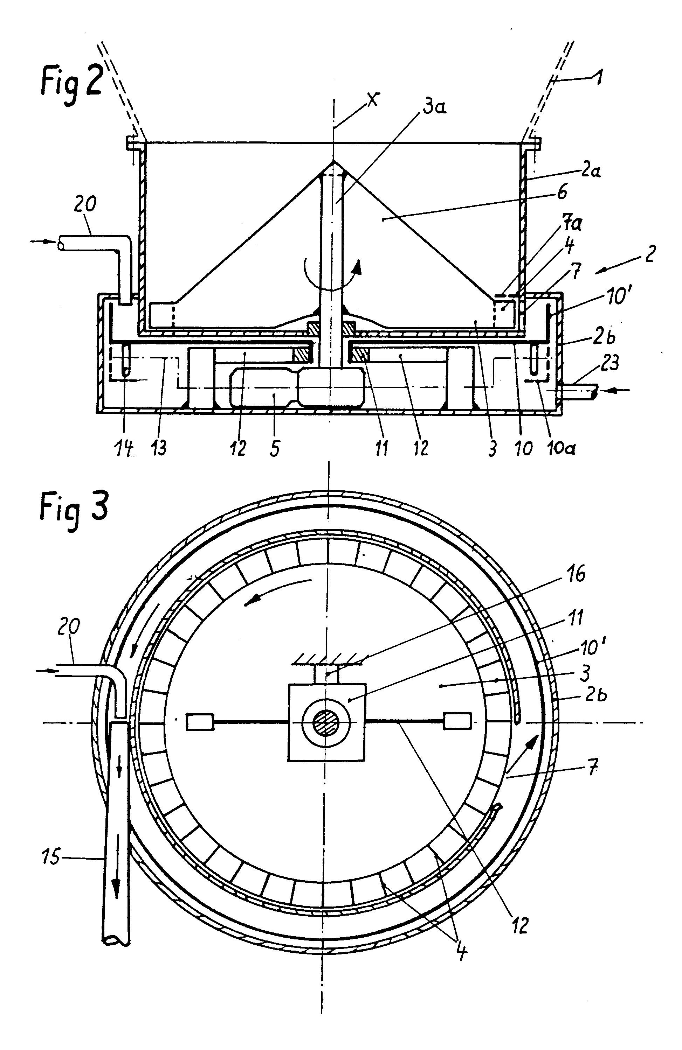

In Fig. 2 und 3 ist ein praktisches Ausführungsbeispiel der Erfindung mit Schüttgutzuführung über ein Schaufelrad mit vertikaler Welle (3a) dargestellt. An einem Schüttgutbehälter oder Silo 1 ist ein zylinder- oder topfförmiges oberes Gehäuseteil 2a befestigt, in dem ein Schaufelrad 3 mit Schaufeln 4 angeordnet ist. Das Gehäuseteil 2a kann auch eine andere Form haben und beispielsweise am oberen Ende einen kleineren Durchmesser als am Schaufelrad 3 aufweisen. Das Schaufelrad 3 rotiert in einer horizontalen Ebene und wird von einem Antriebsmotor 5 mit vertikaler Welle angetrieben. Das Schüttgut gelangt vom Vorratsbehälter 1 über eine kegelförmige Zuführungsfläche 6 des Schaufelrades in die durch die Schaufeln 4 gebildeten Kammern des Rades. Anstelle der kegelförmigen Zuführungsfläche können auch andere Materialführungselemente vorgesehen werden. Das Schaufelrad kann jedoch auch ohne besondere Zuführungselemente ausgeführt werden.

Unterhalb des oberen Gehäuseteils 2a ist koaxial zum Schaufelrad 3 ein Meßrad 10 mit einem senkrechten Rand 10' in einem unteren Gehäuseteil 2b angeordnet. Das Meßrad 10 ist im Durchmesser größer als das Schaufelrad 3 bzw. das Gehäuse 2a und läuft gleichsinnig mit dem Schaufelrad 3 um. Das Meßrad 10 ist in einem Lager 11 aufgenommen, das an Lenkern 12, z. B. Blattfederlenkern, befestigt ist. Die Lenkeranordnung läßt Bewegungen senkrecht zu den Lenkern zu, während Bewegungen in Richtung der Lenker verhindert werden. Das Meßrad 10 wird vom Motor 5 über Antriebsstränge 13 und Reibräder 14 angetrieben. Die Reibräder sind hierbei an der Aufgabe- bzw. Abzugsstelle für das Schüttgut am Meßrad 10 (A und B in Fig. 1) angeordnet. Es kann auch ein getrennter Antrieb für Schaufelrad und Meßrad vorgesehen werden. Anstelle der Reibräder sind auch andere Antriebselemente, z. B. Zahnräder verwendbar, wobei am Meßrad eine passende Verzahnung angeordnet ist. Durch das Gehäuseteil 2b können Meßrad 10 sowie Antrieb 5 usw. hermetisch abgeschlossen werden.

Die Drehzahl der Vorrichtung bzw. des Meßrades kann an die Materialeigenschaften des zu fördernden Schüttgutes angepaßt werden. Hierbei kann z. B. eine Drehzahl von 120 Umdrehungen/Minute vorgesehen werden. Der Radius des Meßrades 10 kann z. B. etwa zwischen 0,5 und 1,0 Meter liegen. Damit ergeben sich Fördergeschwindigkeiten von etwa 6 - 12 m/sec. Es sind jedoch auch andere Drehzahlen und Abmessungen möglich.

Das in den Kammern des Schaufelrades 3 befindliche Schüttgut wird vom Schaufelrad durch ein Fenster 7 im oberen Gehäuseteil 2a auf das Meßrad 10 übergeführt. Das Fenster 7 ist in einem Winkel von 90° zur Wirkungsrichtung der Kraftmeßeinrichtung angeordnet. Wenn Schaufelrad und Meßrad mit der gleichen Geschwindigkeit drehen, treten am Meßrad 10 durch die Aufnahme des Schüttgutes praktisch keine störenden Kräfte auf.

Über dem Fenster 7 kann am Gehäuse 2a eine sich nach innen erstreckende Abdeckplatte oder ein Abdeckblech 7a (gestrichelt dargestellt) angeordnet sein. Dadurch kann bei gefülltem Behälter 2a und Stillstand der Vorrichtung verhindert werden, daß das Schüttgut aus dem Fenster 7 auf das Meßrad 10 fließt.

Das Schüttgut wird vom Meßrad 10 in Umfangsrichtung über etwa 180° transportiert und übt dabei auf das Meßrad entsprechend seiner Masse bzw. seines Gewichts eine Fliehkraft aus. Diese Fliehkraft wird über das an den Lenkern 12 angeordnete Lager 11 auf eine Kraftmeßeinrichtung, z. B. eine Wägezelle 16 übertragen. Die Wägezelle ist in der Ebene des Lagers 11 bzw. der Lenker 12 angeordnet (s.Fig. 3). Das Meßsignal der Wägezelle ist ein Maß für die Förderstärke, z. B. in Kilogramm/Sekunde, des auf dem Meßrad bewegten bzw. befindlichen Schüttgutes.

Nachdem das Meßrad 10 mit dem Schüttgut einen Winkel von etwa 180° durchlaufen hat, wird das Schüttgut mit Hilfe einer schaufel- oder pflugartigen Austragsvorrichtung 15 wieder aus dem Meßrad 10 ausgetragen. Der Austrag kann durch eine Druckluftzuführung 20, die auf die Austragsvorrichtung in Austragsrichtung wirkt, unterstützt werden.

Das Meßrad 10 kann auch anders als in der Zeichnung dargestellt ausgebildet sein. So kann z. B. der Rand 10' des Meßrades nach unten verlängert sein und am unteren Ende eine sich nach innen erstreckende Ringfläche 10a aufweisen, wie in der Zeichnung gestrichelt angedeutet ist. Das Meßrad 10 wird in diesem Fall am äußeren Umfang mit geeigneten Durchbrüchen versehen oder so ausgebildet, daß das Schüttgut vom Fenster 7 auf die Ringfläche 10a durchfallen kann. Von der Ringfläche kann das Schüttgut mit einer einfachen Abstreifvorrichtung (nicht dargestellt) nach innen und unten aus dem Meßrad ausgetragen und zum Beispiel auf eine Fördereinrichtung aufgegeben werden.

In Fig. 4 ist eine Ausführungsform der Erfindung mit einer Eintragsvorrichtung in Form eines Zellrades bzw. einer Zellradschleuse dargestellt. Das Schüttgut wird hierbei durch ein Zellrad 21 in das Meßrad 10 eingetragen. Das Zellrad 21 ist in einem Gehäuse 22 angeordnet, das an einen Behälter 1 angeflanscht sein kann. Der Antrieb des Zellrades ist nicht dargestellt. Die Drehzahlen des Zellrades 21 und des Meßrades 10 können so aufeinander abgestimmt werden, daß sich ein praktisch stoßfreier Eintrag des Schüttgutes in das Meßrad ergibt.

Die Austragsvorrichtung kann wie bei Fig. 2 und 3 beschrieben ausgebildet sein. Der Austrag kann jedoch auch wie die Aufgabe des Schüttgutes auf das Meßrad mit Hilfe eines Zellrades, das anstelle der schaufel- oder pflugartigen Austragsvorrichtung tritt, bewirkt werden. Die Eintrags- und Austragsvorrichtung sowie die Kraftmeßeinrichtung sind wie in Fig. 1 schematisch dargestellt angeordnet.

Wie bei Fig. 2 und 4 angedeutet, kann am Gehäuse 2 bzw. 2b eine Luft- bzw. Spülluftzuführung 23 vorgesehen werden. Durch die Luftzuführung bzw. durch die Herstellung eines geringen Überdruckes im Gehäuse kann das Meßrad 10 wirksam gegenüber dem Gehäuse 2 bzw. 2b abgedichtet werden. Dadurch wird z. B. bei feinkörnigen oder staubförmigen Schüttgütern vermieden, daß Schüttgut aus dem Meßrad in den unteren Teil des Gehäuses austritt.

Das beschriebene Verfahren bzw. die Vorrichtungen zur Durchführung des Verfahrens können sowohl zum Messen oder Regeln der Förderstärke des Schüttgutstromes als auch zur Dosierung von Schüttgütern verwendet werden. Bei der Dosierung kann hierbei die Drehzahl sowohl der Eintragsvorrichtung (Schaufelrad, Zellrad) als auch des Meßrades aufgrund von vorgegebenen Sollwerten und der gemessenen Istwerte der Förderstärke geregelt werden. Hierbei kann auch der Einfluß der Massenbeschleunigung berücksichtigt werden.

**Patentansprüche**

1. Vorrichtung zur Ermittlung eines kontinuierlichen Schüttgutstromes, insbesondere dessen Förderstärke und/oder dessen Dosiermenge, die ein horizontal angeordnetes Meßrad (10) enthält, das um eine vertikale Drehachse (X) rotiert und mit einer Kraftmeßeinrichtung (16) kraftschlüssig in Verbindung steht, wobei über dem Meßrad (10) eine Eintragsvorrichtung vorgesehen ist, die das zu ermittelnde Schüttgut auf das Meßrad (10) aufbringt und einer Austragsvorrichtung (15, 21), die das Schüttgut nach einer Drehbewegung von dem Meßrad (10) entfernt, dadurch gekennzeichnet, daß die Ein- und Austragsvorrichtung um etwa 180° zueinander versetzt angeordnet sind und die Drehachse (X) sich in horizontaler Richtung gegen die auf halber Kreisbahnstrecke zwischen Ein- und Austragsvorrichtung angeordnete Kraftmeßvorrichtung (16) abstützt, so daß durch das Schüttgut auf dem Meßrad wirkende Fliehkräfte bzw. Fliehkraftkomponenten an der Kraftmeßeinrichtung erfaßt werden.

2. Vorrichtung zur Ermittlung eines kontinuierlichen Schüttgutstromes nach Anspruch 1, dadurch gekennzeichnet, daß ein im wesentlichen topf- oder zylinderförmiges Gehäuse (2) mit einer Eintrags- und Austragsvorrichtung für das Schüttgut oberhalb des Meßrades angeordnet ist, das mit einer Eintragsvorrichtung versehen ist, wobei das im Gehäuse (2) angeordnete Meßrad (10) zur Aufnahme des Schüttgutes mit einem Antrieb (5) verbunden ist und daß das Lager (11) zur Aufnahme des Meßrades (10) an Lenkern (12) angeordnet ist, wobei die Lenker (12) zur Abstützung des Lagers (11) und die Kraftmeßeinrichtung (16) so angeordnet sind, daß durch das Schüttgut auf dem Meßrad (10) wirkende Fliegkräfte bzw. Fliegkraftkomponenten an der Kraftmeßeinrichtung (16) erfaßt werden.

3. Vorrichtung nach Anspruch 1 oder 2 gekennzeichnet durch folgende Merkmale:
   - das Gehäuse (2) besteht aus einem topf- oder zylinderförmigen oberen Gehäuseteil (2a), das an einen Vorratsbehälter anschließbar ist, sowie aus einem den unteren Teil des oberen Gehäuseteils (2a) umschließenden und das Meßrad (10) aufnehmenden unteren Gehäuseteil (2b),
   - der Durchmesser des unteren Gehäuseteils (2b) und des Meßrades (10) ist größer als der Durchmesser des oberen Gehäuseteils (2a)
   - im oberen Gehäuseteil (2a) ist koaxial zum Meßrad (10) ein Schaufelrad (3) mit vertikaler Achse (3a) und Antrieb (5) angeordnet,
   - im oberen Gehäuseteil (2a) ist ein Durchbruch oder Fenster (7)angeordnet, durch das das Schüttgut vom Schaufelrad (3) auf das Meßrad (10) überführt wird,wobei das Fenster (7) im Winkel von etwa 90o zur Wirkungsrichtung der Kraftmeßeinrichtung (16) angeordnetist.

4. Vorrichtung nach Anspruch 1, dadurch gekennzeichnet, daß die Eintrags- und/oder Austragsvorrichtung für das Schüttgut als Zellrad (21) oder Zellradschleuse ausgebildet ist.

5. Vorrichtung nach Anspruch 1 - 4, dadurch gekennzeichnet, daß die Austragsvorrichtung als schaufel- oder pflugförmige Vorrichtung (15) ausgebildet ist.

6. Vorrichtung nach Anspruch 1 - 5, dadurch gekennzeichnet, daß das Meßrad (10) über Reibräder (14) angetrieben wird, die im wesentlichen am Eintrags- bzw. Austragsort (A,B) des Schüttgutes angeordnet sind.

7. Vorrichtung nach einem der Ansprüche 1 - 6, dadurch gekennzeichnet, daß für das Meßrad (10) und das Schaufelrad (3) ein gemeinsamer Antrieb (5) vorgesehen ist.

8. Vorrichtung nach Anspruch 1, dadurch gekennzeichnet, daß am Gehäuse (2) Luftzuführungen (20, 23) angeordnet sind.

## Claims

1. Apparatus for the monitoring of a continuous flow of bulk material, in particular its delivery rate and/or its batch quantity, which contains a horizontally arranged measuring wheel (10) that rotates about a vertical axis of rotation (X) and is frictionally coupled to a dynamometer (16), wherein an input device is provided above the measuring wheel (10) which introduces the bulk material being monitored onto the measuring wheel (10) and an output device (15, 21) which removes the bulk material from the measuring wheel (10) after a rotational movement, characterised in that, the input and output devices are arranged approximately 180° offset from each other and the axis of rotation (X) is supported in a horizontal direction against the dynamometer (16) which is arranged half way along the circular path between the input and output devices so that centrifugal forces or the components of centrifugal force exerted on the measuring wheel by the bulk material are registered by the dynamometer.

2. Apparatus for the monitoring of a continuous flow of bulk material according to Claim 1, characterised in that, a substantially pot or cylindrically shaped housing (2) having an input and an output device for the bulk material is arranged above the measuring wheel, which is provided with an input device, wherein the measuring wheel (10) arranged in the housing (2) for receiving the bulk material is coupled to a drive (5), and that, the bearing (11) for seating the measuring wheel (10) is arranged on guides (12), wherein the guides (12) for the support of the bearing (11) and the dynamometer (16) are so arranged that centrifugal forces or the components of centrifugal force exerted on the measuring wheel by the bulk material are registered by the dynamometer (6).

3. Apparatus according to Claim 1 or 2, characterised by the following features:
   - the housing (2) consists of a pot or cylindrically shaped upper housing part (2a) which is connectable to a storage container as well as a lower housing part (2b) which surrounds the lower section of the upper housing part (2a) and accommodates the measuring wheel (10),
   - the diameter of the lower housing part (2b) and of the measuring wheel (10) is greater than the diameter of the upper housing part (2a),
   - a bucket wheel (3) having a vertical axis (3a) and drive (5) is arranged co-axially with the measuring wheel (10) in the upper housing part (2a),
   - an opening or window (7) is arranged in the upper housing part (2a) through which the bulk material is transferred from the bucket wheel (3) onto the measuring wheel (10), wherein the window (7) ia arranged at an angle of about 90° to the effective direction of the dynamometer (16).

4. Apparatus according to Claim 1 characterised in that, the input and /or output device for the bulk material is formed as a paddle wheel (21) or paddle wheel gate.

5. Apparatus according to Claim 1 - 4, characterised in that, the output device is formed as a shovel or plough shaped device (15).

6. Apparatus according to Claim 1 - 5, characterised in that, the measuring wheel (10) is driven by friction wheels (14) which are arranged substantially at the input or output positions (A,B) of the bulk material.

7. Apparatus according to any one of Claims 1 - 6, characterised in that, a common drive (5) is provided for the measuring wheel (10) and the bucket wheel (3).

8. Apparatus according to Claim 1 , characterised in that, air inlet passages (20, 23) are arranged in the housing (2).

## Revendications

1. Dispositif destiné à déterminer un flux continu de matière en vrac, en particulier son débit et/ou sa quantité à doser, qui comporte une roue de mesure (10) disposée horizontalement laquelle tourne autour d'un axe de rotation (X) vertical et est reliée par force à un dispositif de mesure de force (16), dans lequel il est prévu, au-dessus de la roue de mesure (10), un dispositif d'alimentation qui amène la matière en vrac à déterminer sur la roue de mesure (10) et un dispositif d'extraction (15, 21) qui éloigne la matière en vrac de la roue de mesure (10), après une rotation, caractérisé en ce que le dispositif d'alimentation et le dispositif d'extraction sont décalés d'environ 180° l'un par rapport à l'autre et en ce que l'axe de rotation (X) prend appui, dans la direction horizontale, contre le dispositif de mesure de force (16) placé à mi-circuit entre le dispositif d'alimentation et le dispositif d'extraction, ce qui fait que les forces centrifuges ou les composantes de la force centrifuge, agissant par la matière en vrac sur la roue de mesure, sont enregistrées par le dispositif de mesure de force.

2. Dispositif destiné à déterminer un flux continu de matière en vrac selon la revendication 1, caractérisé en ce qu'il est prévu, au-dessus de la roue de mesure, un carter (2), à peu près en forme de pot ou de cylindre avec un dispositif d'alimentation et un dispositif d'extraction pour la matière en vrac, qui est pourvu d'un dispositif d'alimentation, la roue de mesure (10), placée dans le carter (2) pour recevoir la matière en vrac, étant reliée à un mécanisme d'entraînement (5) et en ce que l'appui (11) destiné à recevoir la roue de mesure (10) est placé sur des bras oscillants (12), les bras oscillants (12), destinés à soutenir l'appui (11) et le dispositif de mesure de force (16), étant placés de telle sorte que les forces centrifuges ou les composantes de la force centrifuge, agissant par la matière en vrac sur la roue de mesure (10), sont enregistrées par le dispositif de mesure de force (16).

3. Dispositif selon la revendication 1 ou 2, caractérisé par les caractéristiques suivantes :
   - le carter (2) est constitué d'une partie (2a) supérieure en forme de pot ou de cylindre qui peut être raccordée à un réservoir, ainsi que d'une partie inférieure (2b) entourant la région inférieure de la partie supérieure (2a) et logeant la roue de mesure (10),
   - le diamètre de la partie inférieure (2b) du carter et de la roue de mesure (10) est supérieur au diamètre de la partie supérieure (2a) du carter,
   - dans la partie supérieure (2a) du carter il est placé, coaxialement à la roue de mesure (10), une roue à aubes (3) avec axe vertical (3a) et mécanisme d'entraînement (5),
   - dans la partie supérieure (2a) du carter il est prévu un ajour ou une fenêtre (7) à travers laquelle la matière en vrac passe de la roue à aubes (3) à la roue de mesure (10), la fenêtre (7) étant placée de manière à former un angle d'environ (90°) par rapport à la direction d'action du dispositif de mesure de force (16).

4. Dispositif selon la revendication 1, caractérisé en ce que le dispositif d'alimentation et/ou le dispositif d'extraction pour la matière en vrac est conçu sous la forme d'une roue cellulaire (21) ou d'une écluse à roue cellulaire.

5. Dispositif selon les revendications 1 à 4, caractérisé en ce que le dispositif d'extraction est un dispositif en forme de pelle ou de soc de charrue.

6. Dispositif selon les revendications 1 à 5, caractérisé en ce que la roue de mesure (10) est entraînée par des roues de friction (14) qui sont essentiellement disposées au point d'alimentation ou d'extraction (A, B) de la matière en vrac.

7. Dispositif selon l'une des revendications 1 à 6, caractérisé en ce qu'il est prévu un entraînement (5) commun pour la roue de mesure (10) et pour la roue à aubes (3).

8. Dispositif selon la revendication 1, caractérisé en ce qu'il est prévu sur le carter (2) des arrivées d'air (20, 23).

Fig 1

Fig 4

Fig 2

Fig 3